# EUROPÄISCHE PATENTSCHRIFT

(11) **EP 1 293 387 B1**
(45) Veröffentlichungstag und Bekanntmachung des Hinweises auf die Patenterteilung: **02.08.2006**
(21) Anmeldenummer: 02018995.7
(22) Anmeldetag: 27.08.2002
(51) Int. Cl.: B60R 13/06

(54) **Karosserie und Verfahren sowie Vorrichtung zum Füllen einer Fuge bei einer Karosserie**
Vehicle body and method and means for filling a seam of a vehicle body
Carosserie, procédé et moyens pour remplir un joint d'une carosserie de véhicule

(30) Priorität: 13.09.2001 DE 10145230
(43) Veröffentlichungstag der Anmeldung: 19.03.2003
(73) Patentinhaber: Wilhelm Karmann GmbH, 49084 Osnabrück (DE)
(72) Erfinder: Seidel, Helmut, 49124 Georgsmarienhütte (DE); Lemkau, Thomas, 49082 Osnabrück (DE); Hoge, Reinhold, 49143 Bissendorf (DE); Hesker, Norbert, 48346 Ostbevern (DE); Herzberg, Lutz, 49082 Osnabrück (DE)

(56) Entgegenhaltungen:
- WO-A-96/16793
- WO-A-97/24190
- DE-A- 3 238 651
- DE-A- 19 632 275
- DE-A- 19 749 547
- DE-A- 19 930 109
- FR-A- 2 629 149
- US-A- 3 680 910
- US-A- 4 626 391
- US-A- 5 824 249
- US-A- 6 071 455
- PATENT ABSTRACTS OF JAPAN Bd. 0154, Nr. 89 (M-1189), 11. Dezember 1991 (1991-12-11) -& JP 03 211038 A (TOYODA GOSEI CO LTD), 13. September 1991 (1991-09-13)

## Beschreibung

Die Erfindung betrifft ein Verfahren zum Füllen einer Fuge bei einer Karosserie nach dem Oberbegriff des Patentanspruches 1. Ein derartiges Verfahren ist z.B. aus der US 4626391 A bekannt.

Eine Karosserie eines Kraftfahrzeuges, eines Kraftrades oder eines Anhängers setzt sich bekanntlich aus verschiedenen Karosserieelementen zusammen, zwischen denen Fugen bestehen, welche es zu überbrücken gilt. Insbesondere bei einer Karosserieaußenhaut eines Kraftfahrzeuges sind Fugen störend, da sie zum einen Feuchtigkeit und Schmutz aufnehmen und zum anderen häufig das optische Erscheinungsbild einer Karosserie beeinträchtigen. Das Gleiche trifft auch auf sichtbare Innenhäute einer Karosserie, beispielsweise bei Kleinbussen und Lieferwagen, zu.

Zur Überbrückung von Fugen bei einer Karosserie werden in der Praxis meist sogenannte Zierblenden verwendet, welche in die Fugen eingesetzt und an den die Fugen bildenden Karosserieelementen angeklipst werden. Derartige Zierblenden bilden jedoch ihrerseits wiederum Spalte zu den angrenzenden Karosserieelementen und verursachen als separate Bauteile, welche mit entsprechenden Befestigungsmitteln an einer Karosserieaußenhaut anzubringen sind, einen relativ hohen Kosten- und Montageaufwand. Auch in gestalterischer Hinsicht ist es häufig nicht erwünscht, den betreffenden Fugenbereich mit einer solchen Blende zu versehen, da dies eine Betonung des Fugenbereiches darstellt.

Bei bekannten Fahrzeugen wird ein nahtloser Übergang zwischen Karosserieelementen aus Metall erreicht, indem sich die aneinander grenzenden Außenhautbleche überlappen, wobei der unterliegende Blechabschnitt eine Abstufung aufweist. Die Verbindung zwischen den beiden Außenhautblechen erfolgt dann in der Regel durch Hartlöten mit Messing, an das sich ein Schleifen und Polieren anschließen. Auf diese Weise läßt sich ein "nahtloser" Übergang zwischen zwei Karosserieelementen verwirklichen, der nach einem Lackiervorgang nicht mehr in Erscheinung tritt.

Eine solche Verbindung läßt sich jedoch nicht bei Außenhautblechen aus bestimmten Legierungen, insbesondere Aluminiumlegierungen, oder bei Karosserieelementen aus Kunststoff verwirklichen.

Des Weiteren ist es aus der DE 197 49 547 A1 bei der Verbindung von Blechbauteilen einer Fahrzeugkarosserie bekannt, zur Sicherstellung der Dichtigkeit einer zwischen den Karosseriebauteilen gebildeten Fuge und zur Gestaltung eines ästhetisch ansprechenden Übergangs zwischen den Karosserieblechen ein Fugenfüllmaterial in die Fuge einzubringen.

Damit erhält der Fachmann einen schweren Blechverbund, welcher zur mechanischen Verbindung der Blechbauteile und zur Einbringung des Füllmittels in Fugen in völlig separaten Arbeitsstationen behandelt werden muß.

Es ist daher Aufgabe der vorliegenden Erfindung, ein einfaches und schnelles Verfahren zum Verbinden von Karosserieelementen und Füllen einer Fuge zwischen den Karosserieelementen bereitzustellen, wobei die Verbindung zwischen den Karosserieelementen auf einfache und kostengünstige Art und Weise sowie dicht und gleichzeitig möglichst unauffällig an einer Außenhaut eines Automobils realisierbar ist.

Diese Aufgabe wird durch ein Verfahren nach den Merkmalen des Patentanspruches 1 gelöst.

Gemäß dem Patentanspruch 1 ist somit ein Verfahren zum Verbinden von Kunststoff-Karosserieelementen einer Karosserie vorgesehen, wobei die Karosserieelemente unter Ausbildung einer Fuge zusammengefügt werden und die Fuge mit einem Füllmittel derart verfüllt wird, daß die Fuge an einer Sichtseite mit einer Schalung wenigstens annähernd flüssigkeitsdicht abgedeckt wird und ein so entstandener Hohlraum im Injektionsverfahren mit dem Füllmittel, welches im ausgehärteten Zustand nach Entfernen der Schalung die Kontur der Karosserie im Bereich der Fuge bildet, ausgefüllt wird. Erfindungsgemäß ist dabei vorgesehen, daß die Karosserieelemente zunächst mittels Verklebung miteinander verbunden werden, und daß anschließend in derselben Arbeitsstation die Injektion des Füllmittels, welches selbsthaftend mit dem Kunststoffmaterial der Karosserieelemente ist, durch wenigstens ein Loch im Bereich der Fuge von einer der Sichtseite abgewandten Seite der Karosserieelemente erfolgt.

Indem die Karosserieelemente aus Kunststoffmaterial gebildet werden, können diese mit einem wesentlich geringeren Gewicht als Blechkomponenten bei zugleich hoher Steifigkeit und Festigkeit sowie großer Designfreiheit ausgeführt werden. Mit einer vorgesehenen Klebung der Karosserieelemente können diese schnell und kostengünstig verbunden werden.

Indem nun zusätzlich die Fuge zwischen den Kunststoff-Karosserieelementen mit einem an dem Kunststoffmaterial selbsthaftenden Füllmittel ausgefüllt ist, erübrigt sich in vorteilhafter Weise das Anbringen von Dichtungen oder Zierleisten zur Verblendung der Fuge, und es wird auf einfache und kostengünstige Weise eine Überbrückung zwischen zwei Karosserieelementen verwirklicht, welche das Eintreten von Flüssigkeit oder Schmutz in einen Trennspalt zwischen den Karosserieelementen verhindert. Durch die Ausfüllung der Fuge mit einem selbsthaftenden Füllmittel läßt sich der Fugenbereich vorteilhafterweise auch derart gestalten, daß dieser das Erscheinungsbild der Karosserie nicht beeinträchtigt.

Vorteilhafterweise erhält das Füllmittel an einer Sichtseite eine durch eine Schalung gebildete Kontur. Eine durch eine Schalung gebildete Kontur hat bei beliebiger Reproduzierbarkeit stets die gleiche Form und Qualität, wie es bei seriell zu fertigenden Gütern, welche Karosserien darstellen, erwünscht ist.

Um eine glatte Kontur des Füllmittels zu erzielen, wird dieses durch wenigstens ein Loch im Bereich der Fuge von einer der Sichtseite abgewandten Seite der Karosserieelemente eingespritzt.

Je nach Länge der zu füllenden Fuge kann bereits ein Loch ausreichend sein oder es können mehrere Löcher erforderlich sein, wobei dann die Abstände zwischen den Löchern so zu wählen sind, daß die Teilstränge des später aushärtenden Füllmittels, die beim Einspritzen durch jeweils ein Loch gebildet werden und sich in Längsrichtung der Fuge ausbilden, etwa in der Mitte zwischen zwei Löchern zusammentreffen, so daß sich insgesamt ein durchgehender Füllmittelstrang ergibt.

Mit der erfindungsgemäßen Verklebung der Karosserieelemente und der Einbringung des am Kunststoffmaterial selbsthaftenden Füllmittels ist es zudem möglich, die Verbindung der Karosserieelemente und die Ausfüllung der Fuge an einer Arbeitsstation durchzuführen, wodurch sowohl die Kosten bei der Fertigung gesenkt werden können als auch die Geschwindigkeit der Fertigung erhöht werden kann.

Das Anbringen der Schalung und die Injektion des Füllmittels in den durch die Schalung gebildeten Hohlraum kann teilautomatisiert oder vollautomatisiert, beispielsweise mittels eines Gelenkarmroboters, erfolgen, wodurch sich das erfindungsgemäße Verfahren auch für die Fertigung bei einer Großserie eignet.

Besonders vorteilhaft ist es, wenn die Kontur der Fuge rillenartig ausgebildet ist, da dies größere Toleranzen bei der Festlegung der die Fuge bildenden Karosserieelemente zuläßt.

Die die Fuge bildenden Karosserieelemente sind vorzugsweise Bestandteile einer Karosserieaußenhaut, jedoch ist es auch zweckmäßig, eine sichtbare Fuge an einer Karosserieinnenseite, beispielsweise im Bereich eines Laderaumes eines Kleinbusses oder Lieferwagens, erfindungsgemäß mit einem Füllmittel auszufüllen.

Als sehr vorteilhaft hat es sich gezeigt, wenn die Karosserieelemente, welche die zu überbrückende Fuge bilden, aus SMC(Sheet-Moulding-Compound)-Werkstoff gebildet sind.

Karosserieelemente, welche zunehmend aus Kunststoff, insbesondere SMC-Werkstoff, gestaltet sind, sind Heckdeckel, welche aus werkzeugtechnischen Gründen häufig aus einem Oberteil und einem damit zu verklebenden Unterteil bestehen. Bei einer Karosserie mit einer Fugenfüllung nach der Erfindung kann die hier in der Regel als störend empfundene Trennnaht zwischen den Teilen des Heckdeckels mit einem fließenden Übergang verwirklicht werden.

Bei der Materialauswahl für das Füllmittel hat sich Epoxidharz als besonders geeignet erwiesen, da dieses einen Klebstoff darstellt, der gute Fließeigenschaften aufweist, womit die Fuge schnell gefüllt werden kann. Zugleich ist Epoxidharz im Verarbeitungszustand aber auch derart pastös, daß ein Wegfließen und gegebenenfalls ein Austreten an einem Spalt zwischen den Karosserieelementen und der Schalung vermieden wird. Epoxidharz als Füllmittel hat darüber hinaus den Vorteil, daß es einen sehr geringen Schwund bei der Aushärtung und auch im ausgehärteten Zustand aufweist, womit es sich als sehr maßhaltig erweist und eine nahezu 1:1-Abbildung der Oberfläche der Schalung zuläßt.

Besonders geeignet als Füllmittel ist ein 2-Komponenten-Epoxidharz, welches bei Verarbeitung unter entsprechenden Temperaturen nur eine sehr kurze Härtungszeit erfordert.

Zur Durchführung des Verfahrens ist zweckmäßigerweise eine Vorrichtung vorgesehen, bei der die Arbeitsstation zum Einspritzen des Füllmittels auch gleichzeitig eine Einrichtung zum Verbinden der die Fuge bildenden Karosserieelemente umfasst. Indem die Verklebung der Karosserieelemente miteinander und die Einbringung des Füllmittels in die Fuge in nur einer Arbeitsstation erfolgt, können Werkzeuge eingespart werden und die Fertigung beschleunigt werden.

Weiters ist es vorteilhaft, wenn die Schalung zur Abschottung der Fuge zur Sichtseite hin eine derartige Breite aufweist, daß sie die seitlich der Fuge befindlichen Karosserieelemente wenigstens streifenförmig überdeckt, womit sie eine hinreichende Andruckfläche bietet, mit der die die Fuge bildenden Karosserieelemente so kontaktierbar sind, daß ein Entweichen des Füllmittels bei der Befüllung des Hohlraumes durch Spalte zwischen der Schalung und den Karosserieelementen vermieden wird.

Um eine möglichst glatte Oberfläche des Füllmittels nach seiner Aushärtung zu erreichen, wird die Schalung wenigstens in einem zur Anlage an die Karosserieelemente im Bereich der Fuge bestimmten Bereich zweckmäßigerweise mit einem Trennmittel beschichtet. Alternativ kann die Schalung in diesem Bereich auch aus selbsttrennendem Material, vorzugsweise aus Silikonharz, gebildet sein.

Eine Vorrichtung zur Durchführung des erfindungsgemäßen Verfahrens ist vorzugsweise automatisiert ausgestaltet, wobei die Schalung maschinengehaltert ist und die Injektion des Füllmittels durch eine automatisierte Einspritzeinrichtung erfolgt. Die Schalung und/oder die die Fuge bildenden Karosserieelemente werden dabei vorzugsweise über bekannte mechanische Andruckmittel zueinander gehalten.

Weitere Vorteile und vorteilhafte Ausführungen des Gegenstandes der Erfindung sind der Beschreibung, der Zeichnung und den Patentansprüchen entnehmbar.

Ein Ausführungsbeispiel eines Verfahrens nach der Erfindung ist in der Zeichnung schematisch vereinfacht dargestellt und wird in der nachfolgenden Beschreibung näher erläutert.

Es zeigt:
- Fig. 1: eine Rückansicht eines Kraftfahrzeuges mit einer Karosserie, bei der zwischen Karosserieelementen eine Fuge vorgesehen ist;
- Fig. 2: einen schematisierten Querschnitt durch eine Fuge der Karosserie gemäß Fig. 1 entlang der Linie I-I in Fig. 1; und
- Fig. 3: in einer Schrägansicht einen Ausschnitt der die Fuge gemäß Fig. 1 und Fig. 2 bildenden Karosserieelemente in einer Vorrichtung zum Füllen der Fuge mit einem Füllmittel.

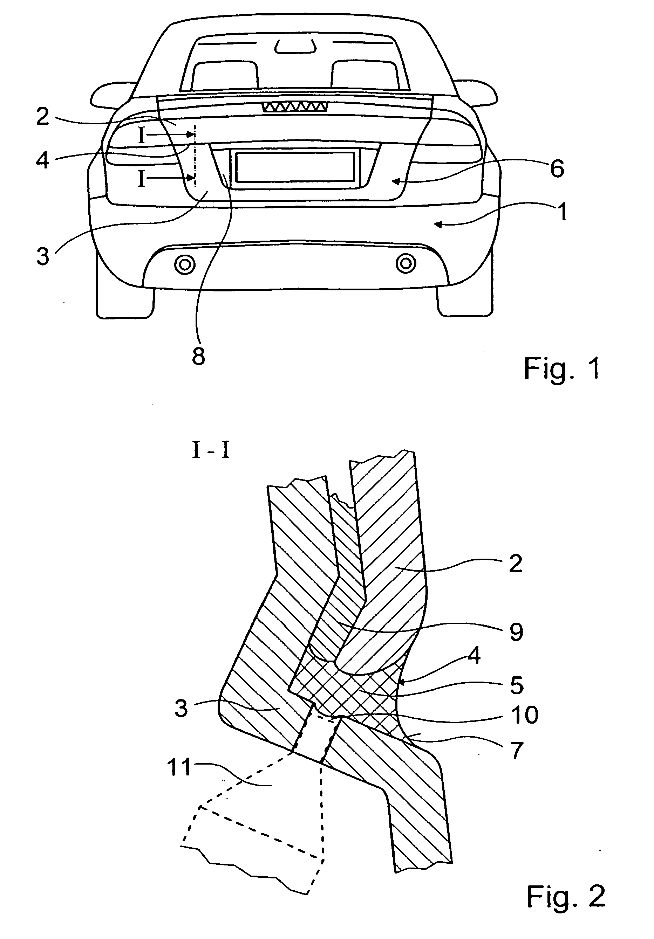

Die Fig. 1 zeigt eine Karosserie 1 eines Kraftfahrzeuges, bei der zwischen einem Karosserieelement 2, welches ein Oberteil eines Heckdeckels 6 darstellt, und einem damit verbundenen Karosserieelement 3, welches ein Unterteil des Heckdeckels 6 darstellt, eine Fuge 4 vorgesehen ist.

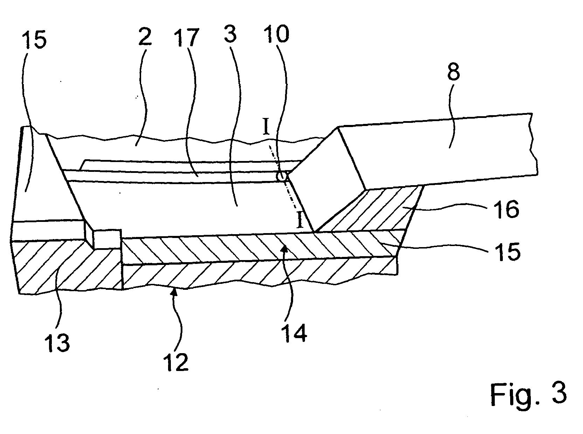

Wie insbesondere Fig. 2 zu entnehmen ist, ist die Fuge 4 mit einem Füllmittel 5 ausgefüllt, welches selbsthaftend mit den die Fuge 4 bildenden Karosserieelementen 2 und 3 verbunden ist. Das Füllmittel 4 stellt im vorliegenden Fall ein 2-Komponenten-Epoxidharz dar, welches an einer Sichtseite eine rillenartige, während der Fertigung durch eine in Fig. 3 näher ersichtliche Schalung 14 gebildete Kontur 7 aufweist.

Das Oberteil 2 und das Unterteil 3 des Heckdeckels 6 sind vorliegend aus SMC-Werkstoff gebildet. Der Heckdeckel 6 ist im Bereich einer Kennzeichenblende 8 aus werkzeugtechnischen Gründen mit dem Oberteil 2 und dem Unterteil 3 geteilt ausgeführt, wobei das Oberteil 2 und das Unterteil 3 durch einen Strukturklebstoff 9 miteinander verbunden sind.

Auf der der Sichtseite abgewandten Seite der Karosserieelemente 2 und 3 ist im Bereich der Fuge 4 ein Loch 10 angeordnet, welches eine Bohrung in dem Unterteil 3 des Heckdeckels 6 darstellt, an die eine Einspritzeinrichtung 11, welche in Fig. 2 strichliniert angedeutet ist, zur Injektion des Füllmittels 5 ansetzbar ist.

Die Fig. 3 zeigt stark vereinfacht und ausschnittsweise eine Vorrichtung 12 zum Füllen der Fuge 4, wobei eine in einer Halterung 13 eingesetzte Schalung 14 gezeigt ist, welche vorliegend aus Silikonharz gebildet ist, aber in anderen Ausführungen selbstverständlich auch aus einem anderen, zur zuverlässigen Abdichtung gegenüber den Karosserieelementen 2 und 3 vorzugsweise teilelastischem Kunststoff gebildet sein kann. Das hier verwendete Silikonharz stellt ein selbsttrennendes Material dar, mit dem eine hohe Oberflächengüte bei der Kontur 7 der Fuge 4 bzw. des Füllmittels 5 erreicht wird.

Da im Bereich der Kennzeichenblende 8 des Fahrzeugs zur Unterbringung einer Kennzeichenbeleuchtung eine Hinterschneidung erforderlich ist, ist die Schalung 14 hier mehrteilig mit einem ersten Teil 15 und einem zweiten, ein Losteil darstellenden Teil 16 ausgebildet. Im Bereich der Fuge 4 ist an dem Unterteil 3 des Heckdeckels eine rillenartige Vertiefung 17 ersichtlich, welche zusammen mit der Schalung 14 einen Hohlraum bildet, in den das Füllmittel 5 eingebracht wird.

Das 2-Komponenten-Epoxidharz des Füllmittels 5 wird hier durch das Loch bzw. die Bohrung 10 von der in Fig. 3 nicht weiter dargestellten Einspritzeinrichtung 11 eingespritzt, welche hier in an sich bekannter Weise eine Mischdüse aufweisen kann, welcher das Füllmittel 5 dosiert zugeführt wird.

Die Anordnung des Loches 10 erfolgt je nach Anwendungsfall in Abstimmung mit dem Fließwiderstand im Hohlraum und der Fließfähigkeit des Füllmittels 5 im Verarbeitungszustand so, daß sich eine gleichmäßige Füllung der Fuge 4 ergibt.

Bei der Durchführung des Verfahrens zur Füllung der Fuge 4 ist hier vorgesehen, daß die die Fuge 4 bildenden Karosserieelemente 2 und 3 maschinell in die ihrerseits maschinengehalterte Schalung 14 eingelegt werden, wobei zunächst eine Verbindung der Karosserieelemente 2 und 3 durch den Strukturklebstoff 9 erfolgt. In derselben Arbeitsstation wird anschließend die Einspritzeinrichtung 11 dichtend in das Loch 10 geführt, was vorzugsweise automatisch, beispielsweise mit Hilfe eines optischen Sensors an einem Düsenkopf und einer elektronischen Auswertungseinheit, erfolgen kann.

Selbstverständlich kann in einfacheren Ausführungen hierzu auch eine handelsübliche Druckluftpistole verwendet werden.

Die dosierte Einspritzung des 2-Komponenten-Epoxidharzes erfolgt vorliegend unter Aufbringung einer Temperatur von ca. 100° C, um eine kurze Härtungszeit von wenigen Minuten zu erreichen. Je nach Material kann jedoch hier auch eine höhere Temperatur gewählt werden, um eine entsprechend hohe Reaktivität zu erzielen.

Nach Aushärtung des Füllmittels 5 wird die Schalung 14 entfernt, wobei sich im vorliegenden Fall durch die Materialwahl für die Schalung 14, welche aus Silikonharz gebildet ist, eine sehr hohe Oberflächengüte bei der Kontur 7 der Fuge 4 ergibt, so daß keine weitere Nachbearbeitung erforderlich ist.

Je nach Anwendungsfall kann es jedoch unter Umständen auch zweckmäßig sein, nach Entfernen der Schalung 14 ein Entgraten oder Polieren vorzunehmen.

Die somit verbundenen Karosserieelemente 2 und 3 mit der entsprechend gefüllten Fuge 4 werden anschließend einer Lackierung zugeführt.

### Bezugszeichen

- 1: Karosserie
- 2: Karosserieelement, Oberteil eines Heckdeckels
- 3: Karosserieelement, Unterteil eines Heckdeckels
- 4: Fuge
- 5: Füllmittel
- 6: Heckdeckel
- 7: Kontur
- 8: Kennzeichenblende
- 9: Strukturklebstoff
- 10: Loch
- 11: Einspritzeinrichtung
- 12: Vorrichtung zum Füllen der Fuge
- 13: Halterung
- 14: Schalung
- 15: erstes Teil der Schalung
- 16: zweites Teil der Schalung
- 17: Vertiefung

## Patentansprüche

1. Verfahren zum Verbinden von Kunststoff-Karosserieelementen (2, 3) einer Karosserie (1), wobei die Karosserieelemente (2, 3) unter Ausbildung einer Fuge (4) zusammengefügt werden und die Fuge (4) mit einem Füllmittel (5) derart verfüllt wird, daß die Fuge (4) an einer Sichtseite mit einer Schalung (14) wenigstens annähernd flüssigkeitsdicht abgedeckt wird und ein so entstandener Hohlraum im Injektionsverfahren mit dem Füllmittel (5), welches im ausgehärteten Zustand nach Entfernen der Schalung (14) die Kontur (7) der Karosserie (1) im Bereich der Fuge (4) bildet, ausgefüllt wird,
**dadurch gekennzeichnet,**
**daß** die Karosserieelemente (2, 3) zunächst mittels Verklebung miteinander verbunden werden, und daß anschließend in derselben Arbeitsstation die Injektion des Füllmittels (5), welches selbsthaftend mit dem Kunststoffmaterial der Karosserieelemente (2, 3) ist, durch wenigstens ein Loch (10) im Bereich der Fuge (4) von einer der Sichtseite abgewandten Seite der Karosserieelemente (2, 3) erfolgt.

2. Verfahren nach Anspruch 2,
**dadurch gekennzeichnet,**
**daß** die Injektion automatisiert, insbesondere mittels eines Gelenkarmroboters, erfolgt.

3. Verfahren nach einem der Ansprüche 1 oder 2,
**dadurch gekennzeichnet,**
**daß** es vor einem Lackiervorgang erfolgt.

4. Verfahren nach einem der Ansprüche 1 bis 3,
**dadurch gekennzeichnet,**
**daß** die Kontur (7) der Fuge (4) rillenartig ausgebildet wird.

## Claims

1. A method for connecting plastic car body elements (2, 3) of a car body (1) whereby the car body elements (2, 3) are joined, with formation of a joint (4), and the joint (4) is filled with a filler (5) such that the joint (4) is covered in an at least approximately liquid-tight manner, at a visible side, by a casing (14) and a cavity which has thus arisen is filled, in the injection method, with the filler (5) which, in the hardened state, after removal of the casing (14) forms the contour (7) of the car body (1) in the area of the joint (4),
**characterised in that**
car body elements (2, 3) are firstly connected with each other by gluing and **in that**, subsequently in the same working station, there occurs the injection of the filler (5), which is self-adhesive to the plastic material of the car body elements (2, 3), through at least one hole (10) in the area of the joint (4) from a side of the car body elements (2, 3) facing away from the visible side.

2. The method according to Claim 2,
**characterised in that**
the injection occurs in an automated manner, particularly using an articulated arm robot.

3. The method according to Claim 1 or 2,
**characterised in that**
it occurs prior to a painting process.

4. The method according to one of Claims 1 to 3,
**characterised in that**
the contour (7) of the gap (4) is formed in a groove-like manner.

## Revendications

1. Méthode de liaison d'éléments de carrosserie en matière plastique (2, 3) d'une carrosserie (1), grâce à laquelle les éléments de carrosserie (2, 3) sont joints ensemble, formant un joint (4), et le joint (4) est rempli d'un moyen de remplissage (5) de telle sorte que le joint (4) soit recouvert, au moins à peu près de façon étanche aux fluides, au niveau d'un côté visible, d'un coffrage (14), et qu'une cavité ainsi créée soit remplie en utilisant le procédé d'injection avec le moyen de remplissage (5), lequel, à l'état durci, après que le coffrage (14) a été enlevé, forme le contour (7) de la carrosserie (1) dans la zone du joint (4).
**caractérisée en ce que** les éléments de carrosserie (2, 3) sont liés l'un à l'autre tout d'abord par collage, et **en ce que** subséquemment, dans la même étape de travail, l'injection du moyen de remplissage (5), lequel se colle à la matière plastique des éléments de carrosserie (2, 3), s'effectue par au moins un trou (10) dans la zone du joint (4) depuis un côté des éléments de carrosserie (2, 3) qui est opposé au côté visible.

2. Méthode selon la revendication 2, **caractérisée en ce que** l'injection s'effectue de façon automatisée en particulier au moyen d'un robot à bras articulé.

3. Méthode selon la revendication 1 ou la revendication 2, **caractérisée en ce qu'**elle s'effectue avant un processus de laquage.

4. Méthode selon les revendications 1 à 3, **caractérisée en ce que** le contour (7) du joint (4) est formé à la façon d'une rainure.
